# EUROPEAN PATENT APPLICATION

(11) **EP 4 575 079 A1**
(43) Date of publication of application: **25.06.2025**
(21) Application number: 24219472.8
(22) Date of filing: 12.12.2024
(51) Int. Cl.: D21C 5/00, D21H 11/14

(54) **METHOD AND DEVICE FOR RECOVERING CELLULOSE FIBERS FROM INDUSTRIAL WASTEWATER**

(30) Priority: 22.12.2023 FI 20236423
(71) Applicant: Owatec Group Oy, 91910 Tupos (FI)
(72) Inventor: PELLINEN, Jaakko, 90520 Oulu (FI); ALATALO, Mikko, 90510 Oulu (FI); MANNILA, Päivi, 90410 Oulu (FI)
(74) Representative: Berggren Oy

(57) **Abstract**

The method for recovering cellulose fibers from industrial wastewater, especially from paper- and pulp industry wastewater comprises steps of adding at least one first chemical into the wastewater for enhancing flocculation of the cellulose fibers, producing small gas bubbles into said wastewater for adhering to the cellulose fibers contained in the wastewater causing the cellulose fibers to rise to the surface of the wastewater as a sludge and removing said sludge from the surface of the wastewater. In the method the small gas bubbles produced into said wastewater contain microbubbles having a diameter less than 10 µm.

## Description

### Technical Field

The invention relates to a method for recovering cellulose fibers from industrial wastewater, especially from paper- and pulp industry wastewater, the method comprising steps of adding at least one first chemical into the wastewater for enhancing flocculation of the cellulose fibers, producing small gas bubbles into said wastewater for adhering to the cellulose fibers contained in the wastewater causing the cellulose fibers to rise to the surface of the wastewater as a sludge and removing said sludge from the surface of the wastewater. The invention further relates to an apparatus used in the method.

### Background Art

During paper and pulp production and other wood processes, paper and pulp fibers undergo different physical and chemical steps before the final product is manufactured. One of the steps is wood pulp washing, where chemicals and other impurities are washed away with water to improve the quality of the paper. During the washing process, some pulp flow away with the effluent water. Various methods and devices have been developed to recover wood fibers from the effluent.

Document EP 0929713 B1 discloses a method of separation of cellulosic fines and cellulosic fibres from an aqueous suspension by screening. Document EP 0742311 A1 discloses a method and apparatus for recovering useful fiber from effluents by wire washer, rotating drum or disk filter and cleaning the extracted fibers by centrifugal cleaner. Document US 1717223 discloses a method and apparatus for the recovery of fibers from liquids, especially from waste or back-water from cellulose, paper and wood-grinding mills. In the method pressurized air is introduced into the liquid to create air bubbles whereby the fibers adhere to the gas bubbles and rise up to the surface of the liquid from which they are separated. Document CN207645943U discloses a wastewater treatment system, in particular a water recycling treatment system in the papermaking industry which adopts the shallow air flotation principle.

The known fiber recovery methods based on the dissolved air flotation (DAF) require complicated devices to create micro-size gas bubbles into the liquid. Further, conventional DAF systems usually need clean water for the bubble formation. The bubbles generated in known DAF-methods are quite big, usually more than 20 µm in diameter, whereby the bonds with the bubbles and the fibers remain weak.

An object of the invention is to provide an improved method and device for recovering cellulose fibers from industrial wastewater, with which drawbacks relating to the prior art can be diminished.

The object of the invention is achieved with the method and device, which are characterized in what is disclosed in the independent patent claims. Some preferred embodiments of the invention are disclosed in the dependent claims.

### Summary of the invention

The invention is related to a method for recovering cellulose fibers from industrial wastewater, especially from paper- and pulp industry wastewater. The method comprises steps of adding at least one first chemical into the wastewater for enhancing flocculation of the cellulose fibers, producing small gas bubbles into said wastewater for adhering to the cellulose fibers contained in the wastewater causing the cellulose fibers to rise to the surface of the wastewater as a sludge and removing said sludge from the surface of the wastewater. Said small gas bubbles produced into said wastewater contain microbubbles having a diameter less than 10 µm.

The method of producing said microbubbles into said wastewater comprises steps of leading wastewater into a tank, extracting a stream of said wastewater from the tank, injecting gas into said stream of wastewater with a first and/or second pump to generate gas-wastewater mixture, raising the pressure of the gas-wastewater mixture above the atmospheric pressure, releasing the pressurised gas-wastewater mixture into said tank, which tank is in atmospheric pressure, causing the injected gas in the gas-wastewater mixture to generate said microbubbles into said wastewater. The pressure of the gas-wastewater mixture is raised to 5,0 bar- 7,0 bar.

In some embodiments of the method according to the invention the wastewater is led to the tank via an inlet passage and the pressurised gas-wastewater mixture is released to the inlet passage and/or to the tank.

In some embodiments of the method according to the invention the produced microbubbles contain air. Additionally, or alternatively the produced microbubbles may contain ozone or carbon dioxide.

Some embodiments of the method according to the invention further comprises steps of
- adding at least one second chemical into the wastewater for enhancing coagulation of dissolved substances contained in the wastewater and /or
- adding at least one third chemical into the wastewater for adjusting pH of the wastewater. The first, second and third chemicals can be added into the wastewater in any appropriate order. Preferably the third chemical, if used, is added to the wastewater before the first and the second chemicals and the second chemical, if used, is added into the wastewater before the first chemical.

In some embodiments of the method according to the invention said at least one first chemical includes at least one polymer and preferably, said at least one second chemical contains Fe- and/or Al- compounds.

Preferably, the at least one first chemical, second and/or third chemicals are added into the wastewater before producing said microbubbles into said wastewater.

Some embodiments of the method according to the invention further comprise a step of separating the cellulose fibers from the sludge for reuse.

The apparatus according to the invention for recovering cellulose fibers from industrial wastewater, especially from paper- and pulp industry wastewater, comprises - means for adding at least one first chemical into the wastewater for enhancing flocculation of the cellulose fibers, means for producing small gas containing microbubbles having a diameter less than 10 µm into said wastewater for adhering to the cellulose fibers contained in the wastewater causing the cellulose fibers to rise to the surface of the wastewater as a sludge and means for removing said sludge from the surface of the wastewater. Said means for producing small gas bubbles into said wastewater comprise a first pump and/or a second pump, which first and second pumps comprise a gas injector for injecting gas into the wastewater and are configured to generate pressurized air-wastewater mixture, the pressure of the gas-wastewater mixture being to 5,0 bar- 7,0 bar, which mixture , when released into the wastewater, which wastewater is in atmospheric pressure, creates said gas containing microbubbles having a diameter less than 10 µm into said wastewater.

In some embodiments of the apparatus according to the invention that said first and/or second pump comprises an impeller, a motor for rotating the impeller, an inflow channel for sucking wastewater to the first and/or second pump, an outflow channel for releasing wastewater out of the first and/or second pump and said gas injector is configured to inject gas into the inflow channel before the impeller in the flowing direction of the wastewater.

Some embodiments of the apparatus according to the invention further comprise a distribution pipe for feeding wastewater into the tank.

Some embodiments of the apparatus according to the invention further comprise a sharing pipe and/or a first exit pipe provided with pressure valves for receiving, storing and releasing pressurised gas-wastewater mixture generated by the first and/or second pump.

Some embodiments of the apparatus according to the invention further comprise a tank for receiving wastewater, an inlet passage for feeding wastewater into said distribution pipe and said distribution pipe and said sharing pipe are inside said tank.

An advantage of the invention is, that in enhances the recovering and recycling the cellulose fibers from the wastewater back into the process. The recovered fibres reduce the need of virgin raw materials and the amount of produced waste material. Separating the cellulose fibers from the wastewater also reduces the chemical oxygen demand (COD) of the wastewater making it cleaner and typically lowering the costs of municipal wastewater purification for the company.

A further advantage of the invention is, that the microbubbles generated in the invention are smaller and have a higher surface area, whereby the contact angle between the bubbles and the particles is larger and the formed bonds are stronger. Further, smaller bubbles adhere better to the small solid particles in the wastewater. Therefore, the invention enhances removal of fibers and solids from the wastewater.

### Brief Description of the Drawings

In the following the invention will be described in detail, by way of examples, with reference to the accompanying drawings in which,
- Fig. 1a: depicts an example on an apparatus according to the invention as a side elevation,
- Fig. 1b: depicts the apparatus shown in fig. 1a seen obliquely from above,
- Fig. 2: depicts a pump belonging to the apparatus shown in figs. 1a and 1b as a partial cross-section and
- Fig. 3: depicts the method according to the invention as a flow chart.

### Detailed Description

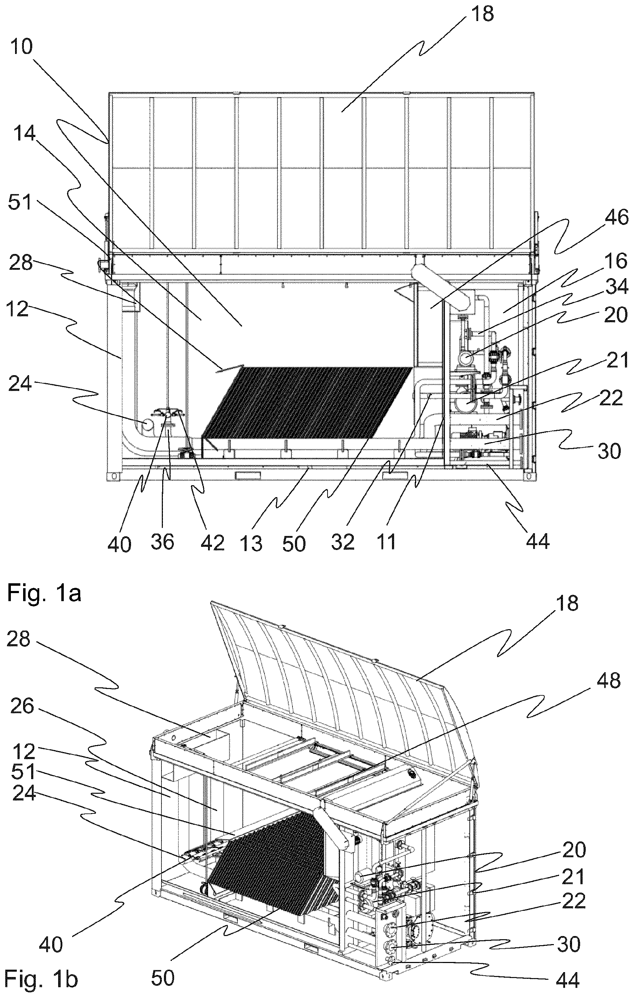

In figures 1a and 1b an example of an apparatus according to the invention is shown. Fig. 1a depicts the apparatus as a side elevation and fig. 1b as a perspective picture seen obliquely from above. In the following both figures are explained simultaneously.

The apparatus comprises a tank 10 for receiving wastewater. The tank has a first end wall 11, a second end wall 12, a bottom 13, a first side wall 14 and a second side wall, which end walls, side walls and bottom define a box-like watertight space for the wastewater to be treated. In figures 1a and 1b the second side wall is removed to make the inner structure of the tank visible. Outside the tank, on the opposing side of the first end wall 11, there is a technical room 16, which contains various technical devices of the apparatus including a first pump 20 and a second pump 21 as explained later. The container has an openable lid, which is hingedly connected to upper edge of the first side wall. In figs. 1a and 1b the lid is in an opened position exposing the open upper side of the tank. The tank and the technical room are arranged into a single container in a way, that the bottom and side walls of the container act as the bottom, side walls and end walls of the tank. Preferably the container is modified from a standard 20 feet (6058 mm) or 40 feet (12192 mm) shipping container. In modified 20 feet shipping containers the volume of the tank can be about 20 m³ and in modified 40 feet shipping container the volume of the tank can be 40 to 50 m³.

At the upper edge of the second end wall 12 there is a treated water basin 28, into which treated wastewater flows from the tank via transfer pipe 26 (fig. 1b). The first end of the transfer pipe opens to the lower part of the tank near the bottom 13 and the open second end of the transfer pipe extends through the bottom of the treated water basin 28.

The wastewater is configured to enter into the tank 10 via an inlet passage 22, which extends through the first end wall 11 from the technical room 16 into the tank 10. The first end of the inlet passage has a flange, into which wastewater delivering pipe (not shown) can be connected. The second end of the inlet passage is provided with a transverse distribution pipe 24, having holes in the wall and at the ends of the distribution pipe through which wastewater can flow out of the distribution pipe as explained later. The distribution pipe is located near the bottom 13 of the tank next to the second end wall 12, whereby the inflowing wastewater is distributed near the second end of the tank.

A suction pipe 32 extends through the first end wall 11 of the tank. Branching first end of the suction pipe is connected to the inflow channels of the first pump 20 and the second pump 21. The second end of the suction pipe opens into the tank near the first end wall. The outflow channel of the first pump is connected to a first exit pipe 34, which is connected to the inlet passage, and the outflow channel of the second pump 21 is connected to a second exit pipe 36. At the end of the second exit pipe there is transverse rake-like sharing pipe 40 for circulating and mixing the wastewater already locating inside the tank.

The first and second pumps operate in a similar manner, and they may be structurally identical. When in operation, the first pump 20 is configured to continuously pump wastewater from the first end of the tank via suction pipe and to deliver the same wastewater back into the tank via first exit pipe 34 and via inlet passage and distribution pipe 24 near the second end of the tank. Inside the first pump 20 air is injected into the wastewater to create a pressurized air-wastewater mixture as explained in detail later.

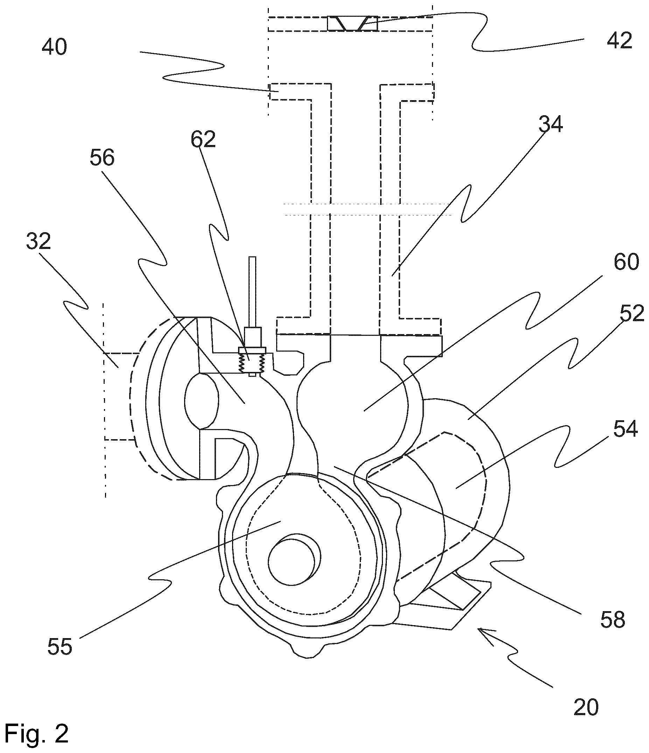

The second pump 21 is configured to suck wastewater from the first end of the tank via suction pipe, inject air into the wastewater, pressurize air-wastewater mixture and to release the pressurized air-wastewater mixture back into the tank via second exit pipe and via sharing pipe 40. The holes in the sharing pipe are provided with pressure valves 42 (fig. 2). The second pump continuously pumps pressurised air-wastewater mixture into the sharing pipe and the pressure valves in the sharing pipe continuously release the pressurised air-wastewater mixture into the tank. The pressure valves are adjusted to release air-wastewater mixture through them in a way, that the pressure of the air-wastewater mixture inside the sharing pipe stays within 5-7 bar. When the pressurized air-wastewater mixture enters through the pressure valves into the tank, microbubbles are generated into the wastewater due to the sudden pressure drop in the released air-wastewater mixture.

The first exit pipe is connected to inlet passage 22 in the technical room 16. The first exit pipe is provided with similar pressure valves as the sharing pipe 40. The pressure valves are adjusted to store pressurized air-wastewater mixture generated in the first pump 20 in the first exit pipe within 5-7 bar pressure and to release air-wastewater mixture through the pressure valves into inlet passage 22. Inside the inlet passage microbubbles are generated into the wastewater due to the sudden pressure drop in the released air-wastewater mixture. The unpressurised wastewater with microbubbles flows via inlet passage and the distribution pipe into the tank.

The microbubbles adhere to the fibres contained in the wastewater causing the fibres to rise on the surface of the wastewater and generate a layer of sludge floating of the surface. For recovering the sludge there is a sludge tank 46 in the upper edge of the first end wall 11. The sludge is removed from the surface of the wastewater into the sludge tank in a known manner with scrapers 48 configured to move along the surface of the wastewater. The sludge tank can be emptied via sludge removal pipe 44.

Inside the tank there is a stack of parallel lamellas 50 for steering the flow of wastewater inside the tank. The lamellas are in tilted position in relation to the side and end walls of the tank and apart from the bottom of the tank. On the upper and lower edges of the stack there may be guide plates 52 for further steering the flow of the wastewater. The wastewater inside the tank flows from the distribution and sharing pipes between lamellas 42 near to the bottom of the tank and rises through the transfer pipe 26 into the treated water basin 28. From the treated water basin, the treated wastewater flows out to the tank via outlet passage 44 through the first end wall. The exit end of the outflow passage is furnished with a flange for connecting to a sewage pipe (not show).

In figure 2 the first and second pumps 20, 21 belonging to the apparatus shown in figs. 1a and 1b is depicted as a partial cross-section. The first and second pumps are structurally similar, whereby figure 2 and the following explanation applies both to the first pump and to the second pump. However, the pumping capacity of the first and second pumps may be unequal. In the following explanation term "pump" refers both to the first and to the second pump.

The pump comprises a casing 52, an impeller 55 and a motor 54 for rotating the impeller. The casing encloses a chamber comprising an inflow channel 56 and an outflow channel 58. The impeller is locating inside said chamber between the inflow and outflow channels. The impeller is a disk-like part having grooves or indentation (not shown) on the outer circumference of the impeller for moving water from the inflow channel to the outflow channel. The inflow and outflow channels are provided with flanges for connection to the suction and exit pipes 32, 34 respectively.

In the inflow channel 56 of the pump 20, 21 there is a gas injector 62, for injecting gas into the wastewater flowing through the inflow channel to create a gas-wastewater mixture. Preferable the injected gas is air, but it can contain also ozone or carbon dioxide.

The outflow channel contains an enlargement between the impeller and the flange constituting a pressure chamber 60. The pressure chamber is connected to the first or second exit pipes 34, 36, which lead into the inlet passage 22 or into the sharing pipe 40. The first exit pipe 34 and the holes in the sharing pipe 40 are provided with pressure valves 42. The purpose of the pressure valves 42 is to raise the pressure of the gas- wastewater mixture inside the sharing pipe and inside the first exit pipe and to maintain this elevated pressure when the pumps are in operation. The pressurised gas-wastewater -mixture is released out of the sharing pipe into the tank and out of the first exit pipe into the inlet passage through the pressure valves 42 to create micro bubbles into the wastewater. Preferably the pressure inside the first exit pipe and in the sharing pipe is 5 to 7 bar, when the pumps are in operation.

The sufficient water pumping capacity and air injection capacity of the pump depends on the amount of the wastewater to be treated and the nature of the wastewater. For example, a pump having a water pumping capacity of 5 m³/h and air injection capacity of 5-6 litre/min can be used in small scale apparatuses and a pump having a water pumping capacity of 15 m³/h and air injection capacity of 15-20 litre/min can be used in large scale apparatuses.

The preferred embodiment of apparatus according to the invention explained above contains the first pump, which is in connection to the first exit pipe and a second pump, which is connection to the sharing pipe. Both pumps are configured to generate pressurized gas-wastewater mixture and both pipes are configured to receive, store and release the pressurised gas-wastewater mixture into wastewater. Although this embodiment is proven to work well, it is possible to construct an embodiment, which contains only one pump for generating pressurized gas-wastewater mixture and only one pipe for receiving, storing and releasing the pressurised gas-wastewater mixture into wastewater.

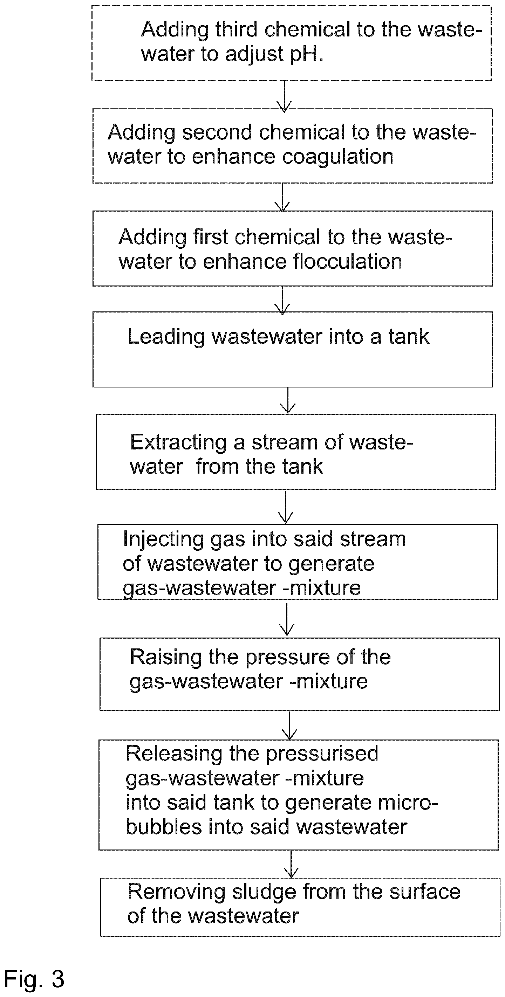

In figure 3 an embodiment of the method according to the invention for recovering cellulose fibers from industrial wastewater, especially from paper- and pulp industry wastewater is depicted as a flow chart.

In the method at least one first chemical is added into the wastewater for enhancing flocculation of the cellulose fibers. Preferably said at least one first chemical includes at least one polymer. Preferably, the first chemicals are added into the wastewater in a separate chemicalisation unit not shown in the figures. The cellulose fibers start to create flocks immediately after the first chemical is added into the wastewater. i.e. already in the chemicalisation unit.

Next the chemicalised wastewater is led into a tank 10 for sludge separation. A stream of said wastewater is extracted from the tank with a first pump 20 and second pump 21 and gas, preferably air, is injected into said stream of wastewater to generate gas- wastewater -mixture. The pressure of this gas-wastewater mixture is then raised above the atmospheric pressure. Preferably the pressure is raised to 5 to 7 bar. The pressurised gas-wastewater mixture is then released from the sharing pipe 40 back into said tank and from the first exit pipe into the inlet passage causing the injected gas in the gas-wastewater mixture to generate microbubbles into said wastewater. In the method at least part, preferably a major part, of the generated bubbles are microbubbles having a diameter, which is less than 10 µm.

The generated microbubbles adhere to the flocculated cellulose fibers contained in the wastewater causing the flocculated cellulose fibers to rise onto the surface of the wastewater as a sludge. The generated sludge is removed from the surface of the wastewater and the cellulose fibers contained in the sludge are separated for reuse in the papermaking process.

In the method the generation of microbubbles into the wastewater takes place in a tank 10 in an atmospheric pressure. The added first chemicals, such as polymers, increase the floc size of the cellulose fibers by binding together the small strings of fibers. When the floc size is bigger the sludge can be recovered more easily from the tank.

If the wastewater to be treated contains dissolved impurities, such as organic matter, organic molecules, polysaccharides, nitrates, phosphates, metals or sulfate at least one second chemical may be added into the wastewater for enhancing coagulation of dissolved substances contained in the wastewater. Preferably said at least one second chemical contains Fe- and/or Al- compounds. If second chemicals are needed to enhance coagulation, these second chemicals are added into the wastewater before the addition of first chemicals.

If the pH in the wastewater to be treated is not within an acceptable range, at least one third chemical can be added into the wastewater for adjusting pH of wastewater. If third chemicals are needed to adjust pH, these third chemicals are added into the wastewater before the addition of first and/or second chemicals.

Preferably, the aforementioned first, second and/or third chemicals are added into the wastewater in a separate chemicalisation unit, from which the chemicalised wastewater is conducted into the tank via inlet passage 22.

Some preferred embodiments of the method and apparatus has been disclosed above. The invention is not limited to the solutions explained above, but the invention can be applied in different ways within the limits set by the patent claims.

**Reference Signs:**

| | | | |
|---|---|---|---|
| 10 | tank | 40 | sharing pipe |
| 11 | first end wall | 42 | pressure valve |
| 12 | second end wall | 44 | sludge removal pipe |
| 13 | bottom | 46 | sludge tank |
| 14 | first side wall | 48 | scraper |
| 16 | technical room | 50 | lamella |
| 18 | lid | 51 | guide plate |
| 20 | first pump | 52 | casing |
| 21 | second pump | 54 | motor |
| 22 | inlet passage | 55 | impeller |
| 24 | distribution pipe | 56 | inflow channel |
| 26 | transfer pipe | 58 | outflow channel |
| 28 | treated water basin | 60 | pressure chamber |
| 30 | outlet passage | 62 | gas injector |
| 32 | suction pipe | | |
| 34 | first exit pipe | | |
| 36 | second exit pipe | | |

## Claims

1. A method for recovering cellulose fibers from industrial wastewater, especially from paper- and pulp industry wastewater, the method comprising steps of
- adding at least one first chemical into the wastewater for enhancing flocculation of the cellulose fibers,
- producing small gas bubbles into said wastewater for adhering to the cellulose fibers contained in the wastewater causing the cellulose fibers to rise to the surface of the wastewater as a sludge, which small gas bubbles contain microbubbles having a diameter less than 10 µm and
- removing said sludge from the surface of the wastewater,
**characterised in that**
producing said microbubbles into said wastewater comprises steps of
- leading wastewater into a tank (10),
- extracting a stream of said wastewater from the tank (10),
- injecting gas into said stream of wastewater with a first and/or second pump (20, 21) to generate gas-wastewater mixture,
- raising the pressure of the gas-wastewater mixture to 5,0 bar- 7,0 bar,
- releasing the pressurised gas-wastewater mixture into said tank (10), which tank (10) is in atmospheric pressure, causing the injected gas in the gas-wastewater mixture to generate said microbubbles into said wastewater.

2. The method according to claim 1, **characterised in that**, the wastewater is led to the tank (10) via an inlet passage (22) and pressurised gas-wastewater mixture is released to the inlet passage (22) and/or to the tank (10).

3. The method according to claim 1 or 2, **characterised in that**, the produced microbubbles contain air.

4. The method according to any of the claims 1 to 3, **characterised in that**, the produced microbubbles contain ozone or carbon dioxide.

5. The method according to any of the claims 1 to 4, **characterised in that**, the method further comprises steps of
- adding at least one second chemical into the wastewater for enhancing coagulation of dissolved substances contained in the wastewater and /or
- adding at least one third chemical into the wastewater for adjusting pH of the wastewater.

6. The method according to any of the claims 1 to 5, **characterised in that**, said at least one first chemical includes at least one polymer.

7. The method according to any of the claims 5 or 6, **characterised in that**, said at least one second chemical contains Fe- and/or Al- compounds.

8. The method according to any of the claims 5 to 7, **characterised in that**, the at least one first chemical, second and/or third chemicals are added into the wastewater before producing said microbubbles into said wastewater.

9. The method according to any of the claims 1 to 8, **characterised in that**, the method further comprises a step of separating the cellulose fibers from the sludge for reuse.

10. An apparatus for recovering cellulose fibers from industrial wastewater, especially from paper- and pulp industry wastewater, said apparatus comprising
- means for adding at least one first chemical into the wastewater for enhancing flocculation of the cellulose fibers,
- means for producing small gas containing microbubbles having a diameter less than 10 µm into said wastewater for adhering to the cellulose fibers contained in the wastewater causing the cellulose fibers to rise to the surface of the wastewater as a sludge,
- means for removing said sludge from the surface of the wastewater,
**characterised in that**, said means for producing small gas bubbles into said wastewater comprise a first pump (20) and/or a second pump (21), which first and second pumps (20) comprise a gas injector (62) for injecting gas into the wastewater and are configured to generate pressurized air-wastewater mixture, the pressure of the gas-wastewater mixture being to 5,0 bar- 7,0 bar, which mixture, when released into the wastewater, which wastewater is in atmospheric pressure, creates said gas containing microbubbles having a diameter less than 10 µm into said wastewater.

11. The apparatus according to claim 10, **characterized in that** said first and/or second pumps (20, 21) comprises an impeller (55), a motor (54) for rotating the impeller (55), an inflow channel (56) for sucking wastewater into the first and/or second pump (20, 21), an outflow channel (58) for releasing wastewater out of the first and or second pump (20, 21) and said gas injector (62) is configured to inject gas into the inflow channel (56) before the impeller (55) in the flowing direction of the wastewater.

12. The apparatus according to claim 11, **characterized in that** it further comprises a distribution pipe (24) for feeding wastewater into the tank (10).

13. The apparatus according to claim 11 or 12, **characterized in that** it further comprises a sharing pipe (40) and/or a first exit pipe (34) provided with pressure valves (42) for receiving, storing and releasing pressurised gas-wastewater mixture generated by the first and/or second pump (20, 21).

14. The apparatus according to claim 12 or 13, **characterized in that**, it further comprises a tank (10) for receiving wastewater, an inlet passage (22) for feeding wastewater into said distribution pipe (24) and said distribution pipe (24) and said sharing pipe (40) are inside said tank (10).
